# EUROPÄISCHE PATENTANMELDUNG

(11) **EP 4 635 666 A1**
(43) Veröffentlichungstag der Anmeldung: **22.10.2025**
(21) Anmeldenummer: 24170797.5
(22) Anmeldetag: 17.04.2024
(51) Int. Cl.: B23K 9/09, B23K 9/167

(54) **VERFAHREN UND VORRICHTUNG ZUM SCHWEISSEN EINES WERKSTÜCKS MIT EINER NICHTABSCHMELZENDEN ELEKTRODE**

(71) Anmelder: FRONIUS INTERNATIONAL GmbH, 4643 Pettenbach (AT)
(72) Erfinder: Willinger, Martin, 4643 Pettenbach (AT); Lattner, Peter, 4643 Pettenbach (AT)
(74) Vertreter: SONN Patentanwälte GmbH & Co KG

(57) **Zusammenfassung**

Die Erfindung betrifft ein Verfahren und eine Vorrichtung (1) zum Schweißen eines Werkstücks (4) mit einer nichtabschmelzenden Elektrode (2), insbesondere einer Wolfram-Elektrode, wobei nach dem Zünden des Lichtbogens (5) zwischen der nichtabschmelzenden Elektrode (2) und dem Werkstück (4) ein Schweißprozess mit zwei abwechselnd angewendeten Schweißzyklen (Z1, Z2) mit unterschiedlichen Schweißparametern durchgeführt wird, wobei im ersten Schweißzyklus (Z1) ein mit einer vorgegebenen Schweißfrequenz (fₛ₁) in der Polarität wechselnder Schweißstrom (I) zwischen der nichtabschmelzenden Elektrode (2) und dem Werkstück (4) eingebracht wird, und nach Ablauf einer vorgegebenen Dauer (t_{z1}) des ersten Schweißzyklus (Z1) für eine vorgegebene Dauer (t_{z2}) auf den zweiten Schweißzyklus (Z2) gewechselt wird. Erfindungsgemäß wird im zweiten Schweißzyklus (Z2) ein mit einer Schweißfrequenz (f_{S2}) in der Polarität wechselnder Schweißstrom (I) zwischen der nichtabschmelzenden Elektrode (2) und dem Werkstück (4) eingebracht, wobei der Schweißstrom (I₂₊) mit positiver Polarität im zweiten Schweißzyklus (Z2) geringer ist als der Schweißstrom (I₁₊) mit positiver Polarität im ersten Schweißzyklus (Z1), und der Schweißstrom (I₂₋) mit negativer Polarität im zweiten Schweißzyklus (Z2) größer ist als der Schweißstrom (I₁₋) mit negativer Polarität im ersten Schweißzyklus (Z1).

## Beschreibung

Die Erfindung betrifft ein Verfahren zum Schweißen eines Werkstücks mit einer nichtabschmelzenden Elektrode, insbesondere einer Wolfram-Elektrode, wobei nach dem Zünden des Lichtbogens zwischen der nichtabschmelzenden Elektrode und dem Werkstück ein Schweißprozess mit zwei abwechselnd angewendeten Schweißzyklen mit unterschiedlichen Schweißparametern durchgeführt wird, wobei im ersten Schweißzyklus ein mit einer vorgegebenen Schweißfrequenz in der Polarität wechselnder Schweißstrom zwischen der nichtabschmelzenden Elektrode und dem Werkstück eingebracht wird, und nach Ablauf einer vorgegebenen Dauer des ersten Schweißzyklus für eine vorgegebene Dauer auf den zweiten Schweißzyklus gewechselt wird.

Die Erfindung betrifft weiters eine Vorrichtung zum Schweißen eines Werkstücks mit einer nichtabschmelzenden Elektrode, insbesondere einer Wolfram-Elektrode, mit einer Schweißstromquelle zum Einbringen eines Schweißstroms zwischen der nichtabschmelzenden Elektrode und dem Werkstück, wobei die Schweißstromquelle eine Steuereinrichtung zur Steuerung des Schweißprozesses aufweist und eine Bedienungseinheit.

Beim Schweißen mit einer nichtabschmelzenden Elektrode, insbesondere beim WIG (Wolfram Inert-gas)-Schweißen mit einer Wolfram-Elektrode, brennt der Lichtbogen zwischen dem Ende der nichtabschmelzenden Elektrode und dem Werkstück. Üblicherweise wird ein Zusatzwerkstoff in Form von Drähten oder Stäben dem Schmelzbad zugeführt und abgeschmolzen. Grundsätzlich kann das Schweißverfahren mit nichtabschmelzender Elektrode sowohl mit Gleichstrom als auch mit Wechselstrom durchgeführt werden. Bei Werkstücken aus Materialien, welche zur Ausbildung einer Oxidschicht neigen, beispielsweise Aluminium und Aluminiumlegierungen oder Magnesium und Magnesiumlegierungen, wird vorwiegend Wechselstrom, also ein Schweißstrom mit abwechselnder Polarität, eingesetzt. Während des Schweißzyklus mit Wechselstrom bzw. AC-Schweißzyklus kann durch die wechselnde Polarität des Schweißstroms die Oxidschicht aufgebrochen werden. Für eine Wärmeeinbringung in das Werkstück wird ein AC-Schweißzyklus häufig mit einem DC-Schweißzyklus kombiniert, bei welchem ein Gleichstrom mit negativer Polarität an das Werkstück angelegt wird. Es werden also Phasen mit wechselnder Polarität und Phasen mit Gleichstrom negativer Polarität kombiniert. Derartige sogenannte AC-DC-Schweißverfahren verursachen aber einen instabilen Lichtbogen und es kann beim Wechsel vom AC-Schweißzyklus zum DC-Schweißzyklus zu einem Pincheffekt und einer Ablösung der angeschmolzenen nichtabschmelzenden Elektrode, insbesondere Wolframelektrode, kommen.

Die vorliegende Erfindung ist sowohl bei manuellen Schweißverfahren, bei welchen der Schweißbrenner per Hand geführt wird, als auch robotergestützten Schweißverfahren, bei welchen der Schweißbrenner von einem Schweißroboter geführt wird, einsetzbar. Die Erfindung kann ebenso beim Plasmaschweißen angewendet werden. Dabei ist eine zusätzliche Plasmadüse vorgesehen, durch welche das Plasmagas strömt. Durch das Plasma wird der zwischen der nichtabschmelzenden Elektrode und dem Werkstück brennende Lichtbogen eingeschnürt.

Die CN 110238487 B beschreibt ein Schweißverfahren mit einer nichtabschmelzbaren Elektrode, wobei ein erster Schweißzyklus mit Strompulsen und ein zweiter Schweißzyklus mit Strompulsen mit gegenüber dem ersten Schweißzyklus geringerem Grundstrom abgewechselt werden. Dadurch soll ein tieferer Einbrand beim Schweißen von Werkstücken aus Aluminiumlegierungen erreicht werden.

Aus der JP 2006-26669 A1 ist ein Schweißverfahren mit nichtabschmelzbarer Elektrode bekannt geworden, bei dem eine Pulsstromphase und eine Grundstromphase abgewechselt werden.

Die CN 115229309 A beschreibt ein Schweißverfahren mit einer nichtabschmelzbaren Elektrode, bei dem ein Schweißzyklus mit positiver Polarität und ein Schweißzyklus mit negativer Polarität abgewechselt wird. Innerhalb des jeweiligen Schweißzyklus werden Pakete sägezahnförmiger Stromimpulse mit einem Grundstrom und einem Booststrom angelegt.

Die Aufgabe der vorliegenden Erfindung besteht in der Schaffung eines oben genannten Schweißverfahrens und einer oben genannten Schweißvorrichtung, durch welche die erwähnten Instabilitäten des Lichtbogens verhindert oder zumindest reduziert werden können und eine Ablösung der angeschmolzenen Elektrode, insbesondere Wolframelektrode, verhindert und somit die Schweißqualität verbessert werden kann. Nachteile bekannter Schweißverfahren mit nichtabschmelzbarer Elektrode sollen vermieden oder zumindest reduziert werden.

In verfahrensmäßiger Hinsicht wird die erfindungsgemäße Aufgabe dadurch gelöst, dass im zweiten Schweißzyklus ein mit der Schweißfrequenz in der Polarität wechselnder Schweißstrom zwischen der nichtabschmelzenden Elektrode und dem Werkstück eingebracht wird, wobei der Schweißstrom mit positiver Polarität im zweiten Schweißzyklus geringer ist als der Schweißstrom mit positiver Polarität im ersten Schweißzyklus, und der Schweißstrom mit negativer Polarität im zweiten Schweißzyklus größer ist als der Schweißstrom mit negativer Polarität im ersten Schweißzyklus. Beim erfindungsgemäßen Schweißverfahren werden zwei AC-Schweißzyklen mit unterschiedlichen Schweißparametern miteinander kombiniert. Im ersten Schweißzyklus, der zum Aufbrechen der Oxidschicht an der Oberfläche des Werkstücks dient, wird ein mit einer Schweißfrequenz in der Polarität wechselnder Schweißstrom angelegt. Im zweiten Schweißzyklus, der zum Einbringen der Wärme ins Werkstück dient, wird ebenfalls ein mit einer Schweißfrequenz in der Polarität wechselnder Schweißstrom angelegt, wobei aber der Schweißstrom mit positiver Polarität bzw. die positive Amplitude des Schweißstroms geringer ist als der Schweißstrom mit positiver Polarität im ersten Schweißzyklus und der Schweißstrom mit negativer Polarität bzw. die negative Amplitude des Schweißstroms geringer ist als der Schweißstrom mit negativer Polarität im ersten Schweißzyklus. Der mittlere Schweißstrom im zweiten Schweißzyklus ist also gegenüber dem mittleren Schweißstrom im ersten Schweißzyklus verschoben. Im Gegensatz zum Stand der Technik, wo häufig ein AC-Schweißzyklus mit einem DC-Schweißzyklus kombiniert wird, resultiert durch die erfindungsgemäße Kombination zweier AC-Schweißzyklen mit den beschriebenen unterschiedlichen Schweißparametern eine verbesserte Entgasung, weniger Poren und ein tieferer Einbrand ins Werkstück im zweiten Schweißzyklus. Im zweiten Schweißzyklus wird also ein geringerer positiver Stromanteil beibehalten, wodurch ein zu starkes Abkühlen der nichtabschmelzenden Elektrode und dadurch ein Ablösen der nichtabschmelzenden Elektrode verhindert wird. Durch das erfindungsgemäße Schweißverfahren kann somit die Prozess- und Lichtbogenstabilität verbessert werden. Ein weiterer Vorteil resultiert in einer gering erhaltenen Reinigung der Schweißstelle, da im zweiten Schweißzyklus ein geringer positiver Halbwellenanteil aufrecht erhalten bleibt. Die Schweißfrequenz im ersten Schweißzyklus muss nicht mit der Schweißfrequenz im zweiten Schweißzyklus übereinstimmen. Das gegenständliche Schweißverfahren ist durch entsprechende Programmierung der Steuereinrichtung des Schweißgeräts einfach und kostengünstig implementierbar.

Vorteilhafterweise wird im zweiten Schweißzyklus ein Schweißstrom mit positiver Polarität verwendet, der 10% bis 90% geringer ist als der Schweißstrom mit positiver Polarität im ersten Schweißzyklus, und im zweiten Schweißzyklus ein Schweißstrom mit negativer Polarität verwendet, der 20% bis 100% größer ist als der Schweißstrom mit negativer Polarität im ersten Schweißzyklus. Derartige Werte haben sich als geeignet herausgestellt. Eine geringere Reduktion des Schweißstroms mit positiver Polarität im zweiten Schweißzyklus und eine geringere Erhöhung des Schweißstroms mit negativer Polarität im zweiten Schweißzyklus gegenüber dem ersten Schweißzyklus wird beispielsweise bei der Bearbeitung dünnerer Bleche vorgezogen, da weniger Wärme in das Werkstück eingebracht wird. Eine stärkere Reduktion des Schweißstroms mit positiver Polarität und eine stärkere Erhöhung des Schweißstroms mit negativer Polarität hingegen wird bei dickeren Blechen gewählt, da dann mehr Wärme in das Werkstück eingebracht wird.

Der Schweißstrom mit positiver Polarität und der Schweißstrom mit negativer Polarität im ersten und zweiten Schweißzyklus kann sinusförmig, dreieckförmig, rechteckförmig oder rechteckförmig mit abgerundeten Ecken sein. Die Kurvenform des Schweißstroms wird auch an das Material und die Dicke des Werkstücks sowie die durchzuführende Schweißung angepasst werden. Beispielsweise eignet sich ein dreieckförmiger Schweißstrom für dickere Werkstücke hauptsächlich aus Aluminium, da ein hoher Lichtbogendruck und eine gute Lichtbogenstabilität und eine gute Einbrenntiefe erzielt werden kann. Ein rechteckförmiger Schweißstrom wird idealerweise bei Werkstücken mit stark ausgeprägter Oxidschicht, insbesondere bei Aluminium, eingesetzt, da die Phasen mit positiver und negativer Polarität am längsten andauern. Die Lärmentwicklung ist allerdings am größten. Zur Reduktion des Lichtbogengeräuschs wird auch gerne ein rechteckförmiger Schweißstrom mit abgerundeten Ecken verwendet. Ein sinusförmiger Schweißstrom eignet sich besonders für saubere Werkstücke und resultiert in einem geringen Lichtbogengeräusch aber auch geringerer Lichtbogenstabilität.

Gemäß einem weiteren Merkmal der Erfindung ist vorgesehen, dass der Schweißstrom mit positiver Polarität im ersten Schweißzyklus sinusförmig und der Schweißstrom mit negativer Polarität im ersten Schweißzyklus rechteckförmig mit abgerundeten Ecken ist. Eine derartige Kurvenform stellt einen guten Kompromiss mit niedrigeren Lichtbogengeräuschen und guter Reinigungswirkung dar.

Wenn im ersten und bzw. oder zweiten Schweißzyklus ein Schweißstrom mit positiver Polarität eingebracht wird, dessen Dauer 15% bis 50% der Dauer des Schweißstroms mit negativer Polarität beträgt, kann die Reinigungswirkung im ersten Schweißzyklus und die Wärmeeinbringung und Eindringtiefe im zweiten Schweißzyklus justiert werden. Das Verhältnis zwischen der Dauer des Schweißstroms mit positiver Polarität und der Dauer des Schweißstroms mit negativer Polarität wird "Balance" genannt. Im zweiten Schweißzyklus wird üblicherweise eine geringere Balance, also eine geringere Dauer des Schweißstroms mit positiver Polarität, verwendet. Typischerweise beträgt die Dauer des Schweißstroms mit positiver Polarität im zweiten Schweißzyklus 35% und die Dauer des Schweißstroms mit negativer Polarität im zweiten Schweißzyklus 65% der gesamten Dauer einer Periode.

Gemäß einem weiteren Merkmal der Erfindung wird der Schweißstrom mit einer Dauer des ersten Schweißzyklus und einer Dauer des zweiten Schweißzyklus zwischen 20 ms und 2 s eingebracht. Dadurch resultiert eine Frequenz der Abwechslung des ersten Schweißzyklus und des zweiten Schweißzyklus bzw. eine Zyklenfrequenz f_{z} zwischen 0,25 und 25 Hz.

Wenn der Schweißstrom mit einer Dauer des ersten Schweißzyklus eingebracht wird, welche unterschiedlich zur Dauer des zweiten Schweißzyklus gewählt wird, kann die Stärke der Reinigung des Werkstücks von der Oxidschicht während des ersten Schweißzyklus im Verhältnis zur Wärmeeinbringung während des zweiten Schweißzyklus eingestellt werden. Die geeignete Einstellung hängt unter anderem vom Material des Werkstücks, der Dicke des Werkstücks, der Sauberkeit des Werkstücks sowie der Art der vorgenommenen Schweißnaht ab.

Während des Schweißens kann ein vorzugsweise drahtförmiger Zusatzwerkstoff zugeführt werden. Über diesen Zusatzwerkstück kann Material zum Verbinden zweier Werkstücke oder zum Auftragen einer Schicht auf die Oberfläche eines Werkstücks zugeführt werden. Der Zusatzwerkstoff wird in geeigneter Weise an das Material des zu schweißenden Werkstücks und die jeweilige Schweißaufgabe angepasst. Die Zuführung des Zusatzmaterials kann sowohl manuell als auch automatisch erfolgen.

Vorteilhafterweise wird der Schweißstrom mit einer Schweißfrequenz zwischen 20 Hz und 1 kHz, insbesondere zwischen 40 Hz und 250 Hz, eingebracht. Derartige Werte für die Schweißfrequenz sind mit heutigen Schweißgeräten erzielbar. Bei niedrigeren Schweißfrequenzen resultiert ein geringeres Lichtbogengeräusch und ein instabiler und weniger fokussierter Lichtbogen, wodurch breitere Schweißnähte bei geringeren Schweißgeschwindigkeiten erzielbar sind. Bei höheren Schweißfrequenzen hingegen resultiert ein höheres Lichtbogengeräusch, ein stabiler und stärker fokussierter Lichtbogen, weshalb die Schweißnaht schmäler und die Schweißgeschwindigkeit höher ausfallen kann. Wie bereits oben erwähnt, muss die Schweißfrequenz im ersten Schweißzyklus nicht mit der Schweißfrequenz im zweiten Schweißzyklus übereinstimmen. Beispielsweise kann die Schweißfrequenz im zweiten Schweißzyklus etwas höher als die Schweißfrequenz im ersten Schweißzyklus gewählt werden, wodurch wegen der schnelleren Umpolung im zweiten Schweißzyklus ein stabilerer Lichtbogen resultiert.

Der Lichtbogen kann durch Kontaktieren des Werkstücks mit der nichtabschmelzenden Elektrode und Abheben der nichtabschmelzenden Elektrode vom Werkstück gezündet werden. Dies stellt eine einfache und kostengünstige Methode der Zündung des Lichtbogens dar, welche insbesondere bei manuellen Schweißverfahren angewendet wird. Die manuelle Kontaktzündung erfordert allerdings eine gewisse Erfahrung.

Alternativ dazu kann der Lichtbogen auch durch eine hochfrequente Hochspannung gezündet werden. Dabei wird ohne Berührung des Werkstücks mit der nichtabschmelzenden Elektrode eine hochfrequente Hochspannung zwischen der nichtabschmelzenden Elektrode und dem Werkstück angelegt. Bei der Hochfrequenzzündung kann es durch die auftretenden hochfrequenten Pulse zu Störungen bei elektrischen Anlagen kommen.

Die Aufgabe der gegenständlichen Erfindung wird auch durch eine oben beschriebene Vorrichtung gelöst, dessen Steuereinrichtung zur Durchführung des oben beschriebenen Verfahrens ausgebildet ist. Zu den dadurch erzielbaren Vorteilen wird auf die obige Beschreibung des Verfahrens verwiesen. Wie bereits oben erwähnt, ist die Implementierung der Erfindung, welche üblicherweise softwaretechnisch in der Steuereinrichtung des Schweißgeräts oder der Stromquelle erfolgt, leicht und kostengünstig möglich.

Die vorliegende Erfindung wird anhand der beigefügten Zeichnungen näher erläutert. Darin zeigen:
- Fig. 1: ein schematisches Blockschaltbild einer Vorrichtung zum Schweißen mit einer nichtabschmelzenden Elektrode;
- Fig. 2: den zeitlichen Verlauf des Schweißstroms bei einem herkömmlichen Schweißverfahren mit abwechselnden Schweißzyklen;
- Fig. 3: den zeitlichen Verlauf des Schweißstroms bei einer ersten Variante des erfindungsgemäßen Schweißverfahrens mit abwechselnden AC-AC-Schweißzyklen;
- Fig. 4: den zeitlichen Verlauf des Schweißstroms gemäß Fig. 3 in größerer zeitlicher Auflösung; und
- Fig. 5: den zeitlichen Verlauf des Schweißstroms bei einer weiteren Variante des erfindungsgemäßen Schweißverfahrens mit abwechselnden AC-AC-Schweißzyklen.

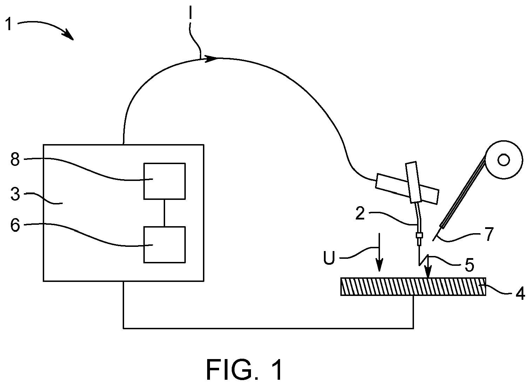

Fig. 1 zeigt ein schematisches Blockschaltbild einer Vorrichtung 1 zum Schweißen mit einer nichtabschmelzenden Elektrode 2, insbesondere einer Vorrichtung 1 zum WIG (Wolfram Inertgas)-Schweißen mit einer Wolfram-Elektrode. Eine Stromquelle 3 wird sowohl mit der nichtabschmelzenden Elektrode 2 als auch mit dem Werkstück 4 aus elektrisch leitfähigem Material verbunden und ein Schweißstrom I zwischen der nichtabschmelzenden Elektrode 2 und dem Werkstück 4 angelegt. Nach dem Zünden des Lichtbogens 5 zwischen dem freien Ende der nichtabschmelzenden Elektrode 2 und dem Werkstück 4 wird der Schweißstrom I mit einer gewünschten Amplitude und einem gewünschten zeitlichen Verlauf angelegt.

Die Zündung ZÜ des Lichtbogens 5 kann durch eine Kontaktzündung erfolgen, wobei das Werkstück 4 mit der nichtabschmelzenden Elektrode 2 bei geringem Schweißstrom berührt wird und dann während des Abhebens der nichtabschmelzenden Elektrode 2 vom Werkstück der Schweißstrom erhöht wird. Alternativ dadurch kann auch eine Hochfrequenzzündung durchgeführt werden, wobei ohne Berührung des Werkstücks 4 mit der nichtabschmelzenden Elektrode 2 eine hochfrequente Hochspannung zwischen der nichtabschmelzenden Elektrode und dem Werkstück angelegt wird. Bei der Kontaktzündung werden hochfrequente Störungen, die bei der Hochfrequenzzündung auftreten können, vermieden.

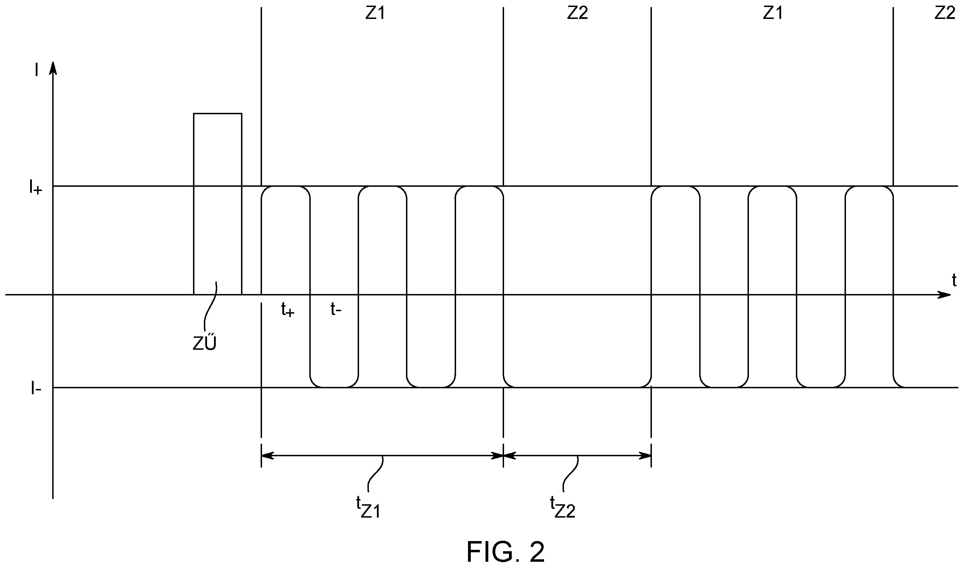

Nach der Zündung ZÜ des Lichtbogens 5 folgt beispielsweise ein erster Schweißzyklus Z1, bei dem ein Schweißstrom I mit abwechselnder Polarität mit einer vorgegebenen Schweißfrequenz fₛ eingebracht wird. Durch die abwechselnde Polarität des Schweißstromes I kann die isolierende Oxidschicht an der Oberfläche des Werkstücks 4 aufgebrochen werden. Nachdem die Oxidschicht entfernt wurde, kann in einem zweiten Schweißzyklus Z2 ein Gleichstrom mit negativer Polarität in das Werkstück 4 eingebracht werden und durch den resultierenden Wärmeeintrag das Material des Werkstücks 4 und allenfalls eines Zusatzwerkstoffs 7 aufgeschmolzen werden. Die Dauer t_{Z1} des ersten Schweißzyklus Z1 wird so gewählt, dass die Oxidschicht möglichst zuverlässig aufgebrochen werden kann, sodass der Schweißstrom I während des zweiten Schweißzyklus Z2 in das Werkstück 4 eingebracht und entsprechende Wärmeenergie eingebracht werden kann, die zum Aufschmelzen des Materials des Werkstücks 4 und allenfalls Zusatzwerkstoffs 7 führt. Die Dauer t_{Z2} des zweiten Schweißzyklus Z2 wird entsprechend der gewünschten Wärmeeinbringung in Abhängigkeit der Dicke und des Materials des Werkstücks 4 gewählt. Üblich ist eine Dauer t_{Z1} des ersten Schweißzyklus Z1 sowie eine Dauer t_{Z2} des zweiten Schweißzyklus Z2 von 20 ms bis 2 s resultierend in einer Zyklenfrequenz f_{Z} zwischen 0,25 und 25 Hz. Ein Beispiel eines solchen Schweißverfahrens nach dem Stand der Technik, bei dem ein rechteckförmiger Schweißstrom I mit abgerundeten Ecken im ersten Schweißzyklus Z1 verwendet wird, ist in Fig. 2 dargestellt.

Über eine üblicherweise in der Stromquelle 3 befindliche Steuereinrichtung 6 werden die zeitlichen Abläufe gesteuert und die jeweiligen Werte des Schweißstromes I und der Schweißspannung U geregelt. Eine Bedieneinrichtung 8 erleichtert die Veränderung und Festlegung der Schweißparameter. Darüber hinaus ist die Steuereinrichtung 6 üblicherweise zur Messung der Schweißspannung U zwischen der nichtabschmelzenden Elektrode 2 und dem Werkstück 4 und zur Messung des Schweißstromes I ausgebildet, sodass eine Regelung des Schweißprozesses erfolgen kann.

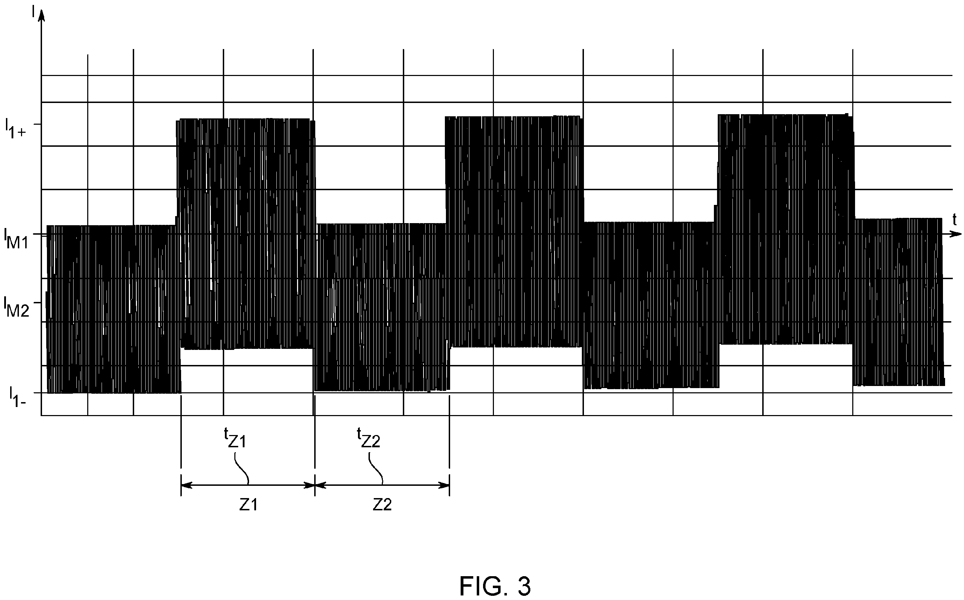

Fig. 3 zeigt den zeitlichen Verlauf des Schweißstroms I bei einer ersten Variante des erfindungsgemäßen Schweißverfahrens mit abwechselnden AC-AC-Schweißzyklen. Nach dem Zünden (nicht gezeigt) des Lichtbogens 5 zwischen der nichtabschmelzenden Elektrode 2 und dem Werkstück 4 wird der erste Schweißprozess Z1 durchgeführt, wobei der Schweißstrom I mit einer vorbestimmten Schweißfrequenz f_{S1} zwischen einer positiven Polarität I₁₊ und einer negativen Polarität I₁₋ um einen bestimmten mittleren Schweißstrom I_{M1} pendelt. Im dargestellten Ausführungsbeispiel beträgt I₁₊ = 90 A und I₁₋ = - 110 A. Nach Ablauf einer vorgegebenen Dauer t_{Z1} des ersten Schweißzyklus Z1 wird für eine vorgegebene Dauer t_{Z2} auf einen zweiten Schweißzyklus Z2 gewechselt. Im zweiten Schweißzyklus Z2 wird ebenfalls ein mit einer Schweißfrequenz f_{S2} in der Polarität wechselnder Schweißstrom I zwischen der nichtabschmelzenden Elektrode 2 und dem Werkstück 4 eingebracht, wobei der Schweißstrom I₂₊ mit positiver Polarität geringer ist als der Schweißstrom I₁₊ mit positiver Polarität im ersten Schweißzyklus Z1, und der Schweißstrom I₂₋ mit negativer Polarität größer ist als der Schweißstrom I₁₋ mit negativer Polarität im ersten Schweißzyklus Z1. Beispielsweise beträgt der Schweißstroim I₂₊ = 10 A und I₂₋ = - 190 A. Der mittlere Schweißstrom I_{M2} während des zweiten Schweißzyklus Z2 ist also gegenüber dem mittleren Schweißstrom I_{M1} während des ersten Schweißzyklus Z1 verschoben. Im Gegensatz zum Stand der Technik, wo beispielsweise ein AC-Schweißzyklus mit einem DC-Schweißzyklus kombiniert wird (siehe Fig. 2), werden hier zwei AC-Schweißzyklen Z1, Z2 mit den beschriebenen unterschiedlichen Schweißparametern kombiniert. Dadurch resultiert eine verbesserte Prozess- und Lichtbogenstabilität.

Vorteilhafterweise wird im zweiten Schweißzyklus Z2 ein Schweißstrom I₂₊ mit positiver Polarität verwendet, der 10% bis 90% geringer ist als der Schweißstrom I₁₊ mit positiver Polarität im ersten Schweißzyklus Z1 und im zweiten Schweißzyklus Z2 ein Schweißstrom I₂₋ mit negativer Polarität verwendet, der 20% bis 100% größer ist als der Schweißstrom I₁₋ mit negativer Polarität im ersten Schweißzyklus Z1.

Der Schweißstrom I₁₊, I₂₊ mit positiver Polarität und der Schweißstrom I₁₋, I₂₋ mit negativer Polarität im ersten und zweiten Schweißzyklus Z1, Z2 kann sinusförmig, dreieckförmig, rechteckförmig oder rechteckförmig mit abgerundeten Ecken oder Kombinationen davon.

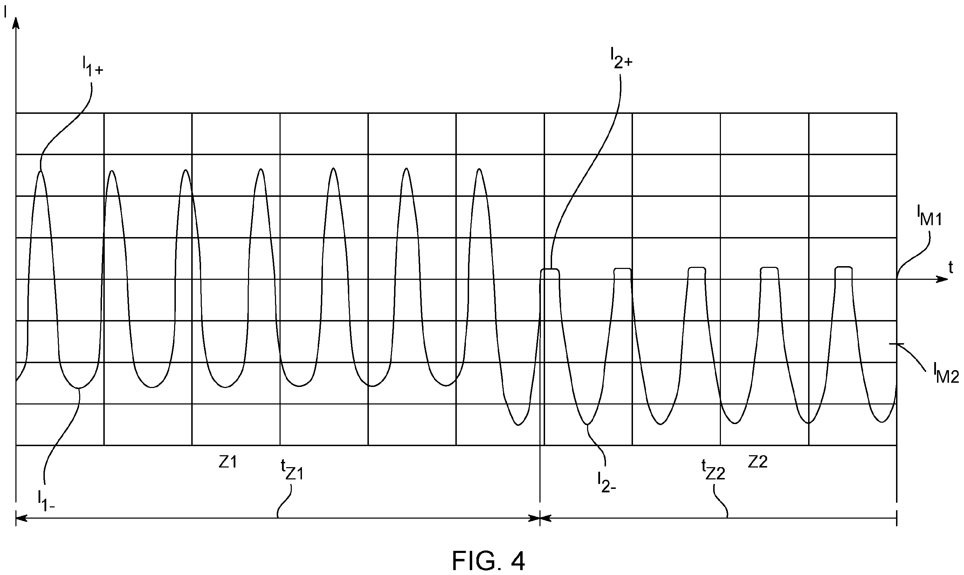

Fig. 4 zeigt den zeitlichen Verlauf des Schweißstroms gemäß Fig. 3 in größerer zeitlicher Auflösung. Der zeitliche Verlauf des Schweißstroms I₁₊ mit positiver Polarität im ersten Schweißzyklus Z1 ist hier etwa sinusförmig, während der zeitliche Verlauf des Schweißstroms I₁₋ mit negativer Polarität im ersten Schweißzyklus Z1 rechteckförmig mit abgerundeten Kanten ist. Während des zweiten Schweißzyklus Z2 ist der Verlauf des Schweißstroms I₂₊ mit positiver Polarität rechteckförmig und der zeitliche Verlauf des Schweißstroms I₂₋ mit negativer Polarität sinusförmig.

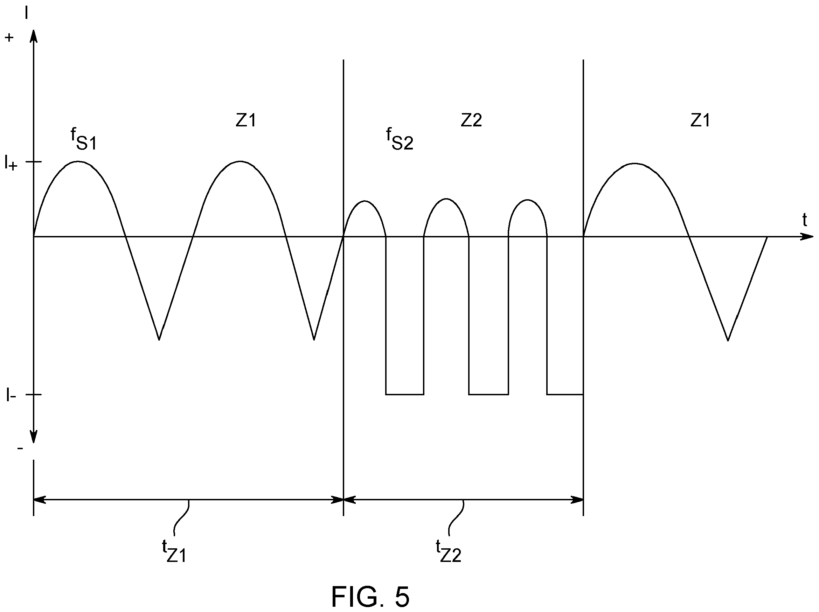

Schließlich zeigt Fig. 5 den zeitlichen Verlauf des Schweißstroms bei einer weiteren Variante des erfindungsgemäßen Schweißverfahrens mit abwechselnden AC-AC-Schweißzyklen. Im ersten Schweißzyklus Z1 wird der Schweißstrom I mit einer Schweißfrequenz f_{S1} (beispielsweise 80 Hz) zwischen der positiven Polarität und der negativen Polarität gewechselt. Der Schweißstrom I₁₊ mit positiver Polarität im ersten Schweißzyklus Z1 ist sinusförmig, wodurch das Lichtbogengeräusch verringert wird und die Oxidschicht aufgebrochen wird. Der Schweißstrom I₁₋ mit negativer Polarität im ersten Schweißzyklus Z1 ist dreieckförmig, wodurch gegenüber einem rechteckförmigen Verlauf höhere Stromspitzen mit negativer Polarität resultieren und ein entsprechender Einbrand generiert wird. Im zweiten Schweißzyklus Z2 wird der Schweißstrom I mit einer höheren Schweißfrequenz f_{S2} (beispielsweise 100 Hz) als im ersten Schweißzyklus Z1 abgewechselt, wobei ein Sinusverlauf des Schweißstroms I₂₊ mit positiver Polarität mit einem rechteckförmigen Verlauf des Schweißstroms I₂₋ mit negativer Polarität kombiniert wird. Durch den Sinusverlauf des Schweißstroms I₂₊ mit positiver Polarität im zweiten Schweißzyklus Z2 kann das Lichtbogengeräusch trotz der höheren Schweißfrequenz f_{S2} reduziert werden, da der Schweißstrom I₂₊ mit positiver Polarität im zweiten Schweißzyklus Z2 gegenüber dem Schweißstrom I₁₊ mit positiver Polarität im ersten Schweißzyklus Z1 geringer gewählt wurde. Durch die Verwendung eines negativen rechteckförmigen Stromverlaufs im zweiten Schweißzyklus Z2 entsteht ein tieferer Einbrand und mehr Wärmeeintrag in das Werkstück und es resultiert eine bessere Entgasung und eine geringere Porenbildung.

## Patentansprüche

1. Verfahren zum Schweißen eines Werkstücks (4) mit einer nichtabschmelzenden Elektrode (2), insbesondere einer Wolfram-Elektrode, wobei nach dem Zünden des Lichtbogens (5) zwischen der nichtabschmelzenden Elektrode (2) und dem Werkstück (4) ein Schweißprozess mit zwei abwechselnd angewendeten Schweißzyklen (Z1, Z2) mit unterschiedlichen Schweißparametern durchgeführt wird, wobei im ersten Schweißzyklus (Z1) ein mit einer vorgegebenen Schweißfrequenz (f_{S1}) in der Polarität wechselnder Schweißstrom (I) zwischen der nichtabschmelzenden Elektrode (2) und dem Werkstück (4) eingebracht wird, und nach Ablauf einer vorgegebenen Dauer (t_{Z1}) des ersten Schweißzyklus (Z1) für eine vorgegebene Dauer (t_{Z2}) auf den zweiten Schweißzyklus (Z2) gewechselt wird, **dadurch gekennzeichnet, dass** im zweiten Schweißzyklus (Z2) ein mit einer Schweißfrequenz (f_{S2}) in der Polarität wechselnder Schweißstrom (I) zwischen der nichtabschmelzenden Elektrode (2) und dem Werkstück (4) eingebracht wird, wobei der Schweißstrom (I₂₊) mit positiver Polarität im zweiten Schweißzyklus (Z2) geringer ist als der Schweißstrom (I₁₊) mit positiver Polarität im ersten Schweißzyklus (Z1), und der Schweißstrom (I₂₋) mit negativer Polarität im zweiten Schweißzyklus (Z2) größer ist als der Schweißstrom (I₁₋) mit negativer Polarität im ersten Schweißzyklus (Z1).

2. Verfahren nach Anspruch 1, **dadurch gekennzeichnet, dass** im zweiten Schweißzyklus (Z2) ein Schweißstrom (I₂₊) mit positiver Polarität verwendet wird, der 10% bis 90% geringer ist als der Schweißstrom (I₁₊) mit positiver Polarität im ersten Schweißzyklus (Z1), und im zweiten Schweißzyklus (Z2) ein Schweißstrom (I₂₋) mit negativer Polarität verwendet wird, der 20% bis 100% größer ist als der Schweißstrom (I₁₋) mit negativer Polarität im ersten Schweißzyklus (Z1).

3. Verfahren nach Anspruch 1 oder 2, **dadurch gekennzeichnet, dass** der Schweißstrom (I₁₊, I₂₊) mit positiver Polarität und der Schweißstrom (I₁₋, I₂₋) mit negativer Polarität im ersten und zweiten Schweißzyklus (Z1, Z2) sinusförmig, dreieckförmig, rechteckförmig oder rechteckförmig mit abgerundeten Ecken ist.

4. Verfahren nach einem der Ansprüche 1 bis 3, **dadurch gekennzeichnet, dass** der Schweißstrom (I₁₊) mit positiver Polarität im ersten Schweißzyklus (Z1) sinusförmig und der Schweißstrom (I₁₋) mit negativer Polarität im ersten Schweißzyklus (Z1) rechteckförmig mit abgerundeten Ecken ist.

5. Verfahren nach einem der Ansprüche 1 bis 4, **dadurch gekennzeichnet, dass** im ersten und bzw. oder zweiten Schweißzyklus (Z1, Z2) ein Schweißstrom (I₁₊, I₂₊) mit positiver Polarität eingebracht wird, dessen Dauer (t₊) 15% bis 50% der Dauer (t_) des Schweißstroms (I₁₋, I₂₋) mit negativer Polarität beträgt.

6. Verfahren nach einem der Ansprüche 1 bis 5, **dadurch gekennzeichnet, dass** der Schweißstrom (I) mit einer Dauer (t_{Z1}) des ersten Schweißzyklus (Z1) und einer Dauer (t_{Z2}) des zweiten Schweißzyklus (Z2) zwischen 20ms und 2 s eingebracht wird.

7. Verfahren nach einem der Ansprüche 1 bis 6, **dadurch gekennzeichnet, dass** der Schweißstrom (I) mit einer Dauer (t_{Z1}) des ersten Schweißzyklus (Z1) eingebracht wird, welche unterschiedlich zur Dauer (t_{Z2}) des zweiten Schweißzyklus (Z2) gewählt wird.

8. Verfahren nach einem der Ansprüche 1 bis 7, **dadurch gekennzeichnet, dass** während des Schweißens ein vorzugsweise drahtförmiger Zusatzwerkstoff (7) zugeführt wird.

9. Verfahren nach einem der Ansprüche 1 bis 8, **dadurch gekennzeichnet, dass** der Schweißstrom (I) im ersten und zweiten Schweißzyklus (Z1, Z2) mit einer Schweißfrequenz (f_{S1}, f_{S2}) zwischen 20 Hz und 1 kHz, insbesondere zwischen 40 Hz und 250 Hz, eingebracht wird.

10. Verfahren nach einem der Ansprüche 1 bis 9, **dadurch gekennzeichnet, dass** der Lichtbogen (5) durch Kontaktieren des Werkstücks (4) mit der nichtabschmelzenden Elektrode (2) und Abheben der nichtabschmelzenden Elektrode (2) vom Werkstück gezündet wird.

11. Verfahren nach einem der Ansprüche 1 bis 9, **dadurch gekennzeichnet, dass** der Lichtbogen (5) durch eine hochfrequente Hochspannung gezündet wird.

12. Vorrichtung (1) zum Schweißen eines Werkstücks (4) mit einer nichtabschmelzenden Elektrode (2), insbesondere einer Wolfram-Elektrode, mit einer Schweißstromquelle (3) zum Einprägen eines Schweißstroms (I) zwischen der nichtabschmelzenden Elektrode (2) und dem Werkstück (4), wobei die Schweißstromquelle (3) eine Steuereinrichtung (6) zur Steuerung des Schweißprozesses aufweist und eine Bedienungseinheit (8), **dadurch gekennzeichnet, dass** die Steuereinrichtung (6) zur Durchführung des Verfahrens nach einem der Ansprüche 1 bis 11 ausgebildet ist.
